(19) Europäisches Patentamt
European Patent Office
Office européen des brevets

(11) EP 0 701 972 B1

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int. Cl.$^6$: **C02F 1/32**, C02F 1/68

(21) Anmeldenummer: **94114660.7**

(22) Anmeldetag: **17.09.1994**

(54) **Verfahren zur Reinigung von industriellem Abwasser**

Process and plant for purifying industrial waste water

Procédé et installation d'épuration d'eaux usées industrielles

(84) Benannte Vertragsstaaten:
**AT BE CH DE DK ES FR GB IT LI NL SE**

(43) Veröffentlichungstag der Anmeldung:
**20.03.1996 Patentblatt 1996/12**

(73) Patentinhaber: **RICOH KYOSAN INC.**
**Tokyo 104 (JP)**

(72) Erfinder: **Zillur, Rehman, Dr.**
**D-79183 Waldkirch (DE)**

(74) Vertreter:
**Blum, Rudolf Emil Ernst et al**
**c/o E. Blum & Co**
**Patentanwälte**
**Vorderberg 11**
**8044 Zürich (CH)**

(56) Entgegenhaltungen:
**WO-A-90/14312**     **DE-A- 3 500 394**
**DE-A- 3 836 850**     **US-A- 4 333 833**

• **PATENT ABSTRACTS OF JAPAN vol. 017 no. 452 (C-1099) ,19.August 1993 & JP-A-05 104095 (JINGO NAKAZAWA) 27.April 1993,**

## Beschreibung

Die vorliegende Erfindung betrifft ein Verfahren zur reinigenden Behandlung von industriellem Abwasser, bei welcher dem Abwasser Behandlungsstoffe zugegeben werden.

Unter industriellem Abwasser ist beispielsweise Abwasser aus Entfettungsmaschinen, in denen z.B. Schrauben von Oel gereinigt werden müssen, zu verstehen, Spülwasser aus Flaschen- und Gläserreinigungsmaschinen, in denen Getränkeflaschen oder Joghurtgläser oder Glasbehälter für andere Lebensmittel gereinigt werden, weiter Wasser in Kühlkreisläufen, Heisswasserboiler, Betriebsabwasser, etc.

Zur Behandlung solche Abwässer werden je nach Art der Verunreinigung unterschiedliche Behandlungsstoffe zugegeben. Beispiele solcher Behandlungsstoffe sind $CO_2$, Ozon, $H_2O_2$, $O_2$, HCl, $H_2SO_4$, $HNO_3$, $TiO_2$ (als Katalysator), $AlCl_3$, $Al_2(SO_4)_3$, P AlCl, (Polyaluminium Chlorid), Polyelektrolyten u.a. Mit diesen Behandlungsstoffen wird, abhängig von der Art der Verunreinigung eine Neutralisation, eine Entsteinung, eine Entkeimung, ein CSB-Abbau, ein Flocken, etc. durchgeführt.

Die entsprechenden Verfahrensschritte sind bis anhin örtlich und somit auch zeitlich getrennt, und insbesondere bezüglich der Apparaturen voneinander örtlich getrennt durchgeführt worden.

Als Beispiel soll eine Reinigungsmaschine zum Reinigen von Flaschen und Gläsern angeführt werden, wobei dieselben Vorgänge auch bei Maschinen zum Reinigen von Dosen und Metallen auftreten.

In solchen Reinigungsmaschinen werden die Flaschen, Gläser, etc. zuerst in einer Vorweiche und danach im Hauptlaugenbad vorgereinigt. Es folgt die Spülung, welche kaskadenartig bei diversen Temperaturen als Frischwasser, Kaltwasser, Warmwasser I und Warmwasser II im Gegenstrom, z.B. zur Flaschenfortbewegung, erfolgt.

Bei dieser Spülungskonstellation fliesst das Frischwasser in das Kaltwasserbecken, das Kaltwasser in das Warmwasser I-Becken, das Warmwasser I in das Warmwasser II-Becken, der Ueberlauf von Warmwasser II gelangt zur Vorweiche und schliesslich in den Abwasserkanal.

Eine der Waschmaschine angepasst Wassermenge, im allgemeinen das zwei- bis dreifache der Frischwassermenge, wird bevorzugt kontinuierlich aus dem Warmwasser II-Becken entnommen, in einer Anlage aufbereitet, behandelt und zum Warmwasser II-Becken zurückgeführt.

In den einzelnen Spülstationen treten Probleme auf, die das Produkt qualitativ negativ beeinflussen und zum anderen die Reinigung unwirtschaftlicher machen.

Ein erstes Problem ist die Steinbildung an den Flaschen, Gläsern, Trägerkörpern, Wärmeaustauschern, Spritzdüsen, Transportketten und im Becken.

Die Steinbildung ist vorwiegend das Resultat von Ablagerungen von Kalzium, Magnesium, Karbonaten und Phosphaten.

Mit der Steinbildung verschlechtert sich die Wasser-, Energie- und bakteriologische Bilanz einer Waschmaschine; die Korrosion nimmt zu und die Maschine ist nicht mehr leistungsfähig.

Weiterhin vermehren sich - durch die idealen Temperaturen von 20-60°C - in den Spülzonen die Keime, welche ihrerseits das Produkt, nämlich die Getränke, qualitativ verschlechtern.

Zudem ist das Abwasser, welches von den Spülzonen über Warmwasser II in die Vorweiche fliesst, alkalisch und muss neutralisiert werden. Dies wird meistens ausserhalb der Waschmaschine gemacht.

Das abfliessende Abwasser, das von der Waschmaschine über die Spülzone Warmwasser II fliesst, ist organisch belastet, hat also hohe CSB-Werte.

Bekannte Massnahmen zur Lösung der obengenannten Probleme mit anderen Verfahren sind zum Teil praktiziert. Die Steinbildung wird demnach in den Spülzonen durch Enthärtung des Frischwassers, Zugabe von Komplexierungsmitteln, durch Einblasen von Kohlensäure oder Zugabe von anderen Säuren in das Spülbecken der Waschmaschine vermieden.

Neuerdings gibt es auch die Neutralisation des Warmwassers II mit Kohlensäure, welche ausserhalb der Waschmaschine erfolgt. Die apparative Konzeption erfordert jedoch bei höheren Temperaturen von 50-70°C in Warmwasser II einen sehr hohen Verbrauch an $CO_2$.

Die Keimvermehrung wird durch Zugabe von Chemikalien in die Spülzonen reduziert. In den seltensten Fällen wird auch eine Kombination von UV und Desinfektionsmitteln verwendet. Die Verwendung von UV setzt bei schmutzigen Spülwässern eine besondere Konzeption und vor allem ein vollautomatisches Lampenreinigungssystem voraus.

Die Behandlung der CSB-Fracht einer Waschmaschine erfolgt dezentral in der betrieblichen Abwasserbehandlungsanlage und der örtlichen Kläranlage.

Schliesslich erfolgt die Neutralisation auch dezentral in Betrieben.

Es ist ersichtlich, dass somit zum Betrieb einer Waschmaschine für Flaschen, Gläser, auch Dosen und Metallteile für alle oben beschriebenen Probleme viele Verfahrensschritte und damit viele kostenaufwendige Vorrichtungen, Apparaturen und Geräte notwendig sind. Weiter führt die Zugabe von Chemikalien in die Spülzonen der Waschmaschine zu erheblichen Kosten, Korrosion und Ausfall der Maschinen sowie Abwasserbelastungen durch diese.

Hier will die Erfindung Abhilfe schaffen. Die Erfindung, wie sie in Anspruch 1 gekennzeichnet ist, löst die Aufgabe, ein Verfahren zur reinigenden Behandlung von industriellem Abwasser zu schaffen, bei dem das Abwasser zu einem Abwasserstrahl umgebildet wird und die Behandlungsstoffe gemeinsam in einem einzigen Bereich dem Abwasserstrahl zudosiert werden, um vom Abwasserstrahl mitgerissen zu werden. Danach wird das Abwasser mit den Behandlungsstoffen einer UV-Behandlung ausgesetzt, einer Turbulenz für ein inniges Mischen ausgesetzt und schliesslich unter Aufrechterhaltung eines Druckes einer Verweilzeit unterworfen.

Die Anlage zur Durchführung des Verfahrens ist gekennzeichnet durch mindestens eine Strahlpumpenvorrichtung, deren Betriebsflüssigkeit das Abwasser ist und die Anschlüsse aufweist, die mit den Quellen der jeweiligen Behandlungsstoffe verbunden sind, so dass die zuströmenden Behandlungsstoffe durch das Abwasser mitgerissen werden. Die Strahlpumpenvorrichtung ist in Strömungsrichtung des Abwassers von einer UV-Anlage, einem als statischen Mischer ausgebildeten Reaktionsbeschleuniger und schliesslich von einer Rohrbündeleinrichtung gefolgt.

In der Strahlpumpeneinrichtung werden dem Abwasserstrom die jeweiligen Behandlungsmittel, z.B. Kohlensäure, Salzsäure, Polyaluminiumchlorid, Ozon, Peroxide, Natronlauge, Flockungsmittel, Katalysator, etc. in einem einzigen Bereich zugeführt, worauf das Abwasser in der UV-Kammer mit einem eigenen, an sich bekannten Reinigungs- und Mischsystem katalytisch oxidiert, entkeimt wird, und wobei das CSB abgebaut wird. Danach wird das Abwasser unter einem Druck von bis zu 10 bar stehend durch ein Rohrbündel geleitet, in welchem die Kohlensäure bzw. Salzsäure im Wasser aufgelöst wird. Die Karbonate und Phosphate, welche Steine bilden, werden ebenfalls aufgelöst und das Abwasser wird neutralisiert. Im Falle von Flocken werden diese, die irreversibel an Schadstoffe gebunden sind, stabilisiert und in bekannter Weise mittels Filter abgetrennt.

Die durch die erfindung erreichten Vorteile sind im wesentlichen darin zu sehen, dass die Behandlungsanlage äusserst gedrängt aufgebaut werden kann, platzsparend und kostengünstig und auch wenig störungsanfällig ist. Es ist lediglich ein Apparat in Röhrenform mit UV- und Mischeinheit vorhanden, der unter Druck arbeitet, wobei alle Chemikalien, d.h. Behandlungsmittel, ob flüssig oder gasförmig, bei einem einzigen Bereich in einer Strahldüse zudosiert werden. Auf diese Weise gelingt es, mehrere chemische Reaktionen mit einem Apparat durchzuführen. Die Anlage kann auch äusserst platzsparend gebaut werden, weil jegliche Geometrie in Röhrenform möglich ist, und ist nach dem Baukastenprinzip konzipiert, d.h. ist in allen Richtungen erweiterbar und damit weiter kostengünstig.

Im folgenden wird die Erfindung anhand der lediglich eine Ausführungsform zeigenden Zeichnung näher erläutert.

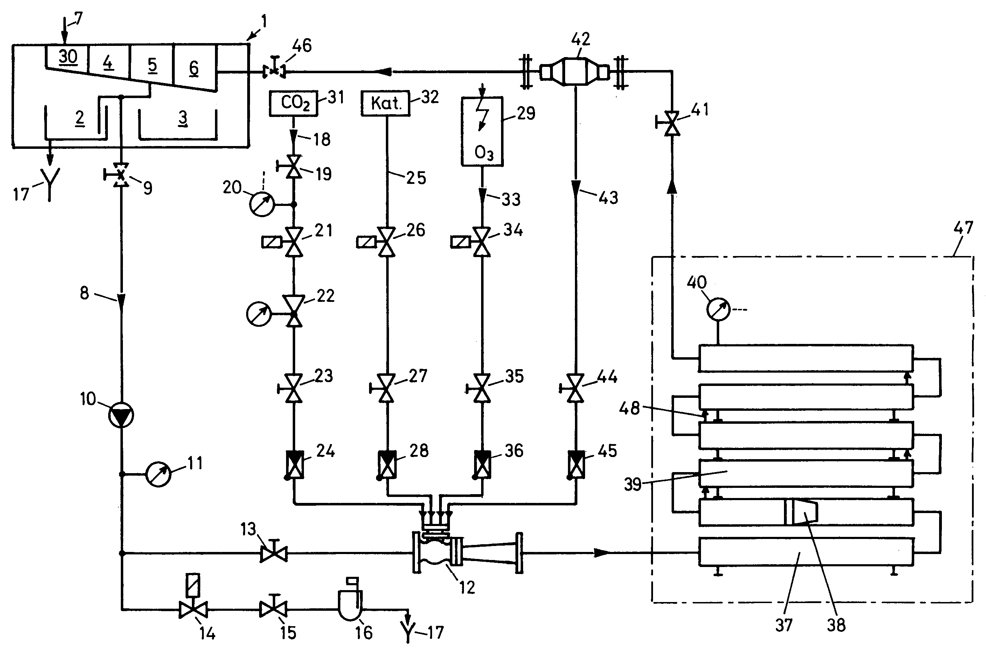

Die einzige Figur zeigt das Kreislaufschema einer Anlage zur Behandlung des Spülwassers einer Flaschen- und Gläserwaschmaschine.

Die Figur zeigt ein Kreislaufschema, wobei zu betonen ist, dass auch im Durchlauf gearbeitet werden kann. Weiter ist festzuhalten, dass, obwohl nachstehend Bezug auf eine Flaschenreinigungsmaschine genommen ist, die Anlage auch zur Behandlung des Abwassers von z.B. Entfettungsmaschinen, Kühlkreisläufen, Boiler, etc. einsetzbar ist, wobei gegebenenfalls unterschiedliche Behandlungsmittel dem Abwasser zugesetzt werden.

Die Waschmaschine ist mit der Bezugsziffer 1 bezeichnet. Die ankommenden Flaschen gelangen vorerst in eine Vorreinigungsstufe 2, Vorweiche genannt und danach in eine alkalische Reinigungsstufe 3, Lauge genannt. Das Wasser der Vorweiche 2 fliesst konstant in die Kanalisation 17 und wird als Abwasser der Waschmaschine bezeichnet.

Das Wasser für die Vorweiche 2 kommt von der Spülung Warmwasser II 6 kontinuierlich an. Das Abwasser ist stark alkalisch, pH 12-14 und hat einen CSB-Wert von 800-2000 mg $O_2$/l.

Die Flaschen gelangen nach dem Laugenbad 3 in die Spülzonen Warmwasser II 6, Warmwasser I 5, Kaltwasser 4 und Frischwasserspülung 30. Die Zufuhr von Frischwasser ist mit dem Pfeil 7 angedeutet.

In den Spülzonen Warmwasser II 6, Warmwasser I 5 und Kaltwasser 4 sowie auch am bekanntlich vorhandenen Wärmetauscher und Flaschenkorb bilden sich vorwiegend Karbonatsteine, welche die Kosten für Chemikalien und Wärmeenergie erhöhen und die Reinigung durch Blockierung der Düsen verschlechtern. Ausserdem muss in den Spülzonen Warmwasser II 6, Warmwasser I 5 und Kaltwasser 4 dar Wasser weitgehend keimfrei gehalten werden, damit die gereinigten Flaschen die Anforderungen erfüllen.

Die obengenannten Vorgänge und die entsprechenden Baueinheiten sind allgemein bekannt und werden daher nicht im einzelnen beschrieben.

Aus dem Warmwasser II-Becken 6 wird eine Menge, 2-3mal der Menge, welche in die Vorweiche 2 fliesst, mittels einer Strahlpumpe 12 (Venturi) entnommen und durch den Reaktor 47 rezirkuliert.

Das Spülwasser aus Warmwasser II 6 strömt durch ein Absperrventil 9 in eine Leitung 8. Diese Leitung 8 führt zu einer Umwälzpumpe 10. Die Pumpe 10 ist in Strömungsrichtung von einem Manometer 11 gefolgt, welches den Eingangsdruck der Strahlpumpe 12 misst. Vor dieser Strahlpumpe 12 ist ein Regelventil 13 zur Regelung des Druckes des zirkulierenden Wassers vor der Strahlpumpe 12 montiert.

Durch das Magnetventil 14 strömt eine kleine Menge Spülwasser zum Regelventil 15, das die Durchflussmenge regelt, und zum pH-Messgerät 16 und von dort in den Abwasserkanal 17.

Der Strahlpumpe 12 wird von einer Quelle 31 durch die Rohrleitung 18 $CO_2$ zugeführt. Die Rohrleitung 18 ist mit einem Absperrventil 19 und einem Druckwächter 20 für $CO_2$ versehen, der bei zu hohem oder zu niedrigem $CO_2$-Eingangsdruck schaltet. Nach dem Druckwächter 20 befindet sich ein Magnetventil 21, das elektronisch mit der pH-Sonde 16 verbunden ist und entsprechend dem gemessenen pH-Wert ebenfalls die

$CO_2$-Zufuhr steuert. Ferner ist ein Druckminderer 22 zur Einstellung des $CO_2$-Druckes, ein Absperrventil 23 und ein Rückschlagventil 24 angeordnet. Das $CO_2$ wird mit einem Druck im Bereich 1-10 bar zugeführt.

Der Katalysator, bei der vorliegenden Ausführung $TiO_2$ (Titandioxydsuspension ca. 0,05 %), strömt von der Quelle 32 durch die Rohrleitung 25 zur Strahlpumpe 12. Diese Leitung 25 ist mit einem Magnetventil 26 zur Steuerung der Katalysatorzufuhr, einem Absperrventil 27 und einem Rückschlagventil 28 ausgerüstet. Im Ozonerzeuger 29 wird $O_3$ erzeugt. Das Ozon strömt durch eine weitere Leitung 33, die mit einem Magnetventil 34 zur Steuerung der $O_3$-Zufuhr, einem Absperrventil 35 und einem Rückschlagventil 36 ausgerüstet ist und mit der gleichen Rohrleitung auch Wasserstoffperoxyd als Steuerstoffträger dosiert werden.

Durch weitere Quellen und Rohrleitungen können auch Flockungs- und Fällungsmittel zur selektiven Fällung eines Produkts bzw. zur irreversiblen Bindung der Schadstoffe an gebildete Flocken über die Strahlpumpe 12 zudosiert werden, abhängig von den auszuscheidenden Verunreinigungen.

Der Strahlpumpe 12 folgt eine Dünnschicht-UV-Anlage 37 (1-10 mm Abstand der Lichtquelle von der Reaktorwand), die die Reaktionsenergie für die Oxydation und die Entkeimung liefert. Die UV-Anlage 37 ist mit einem eigenen Lampenreinigungssystem sowie mit Intensitäts-(UV-Energie), Temperatur- und Durchflussmessung ausgerüstet. Der UV-Anlage 37 ist ein Reaktionsbeschleuniger 38 nachgeschaltet, der z.B. wie ein statischer Mischer arbeitet und im Spülwasser Turbulenzen erzeugt, wodurch eine innige Mischung der Stoffe wie $CO_2$, $O_3$, $H_2O_2$ u.a. mit dem Spülwasser bewirkt wird. Dem Reaktionsbeschleuniger 38 folgt ein Röhrenbündel 39, in dem die Reaktionen unter Drücken von 1-10 bar erfolgen, wobei die nicht reagierenden Gase, z.B. $CO_2$, durch Leitungen 48 zurückgeführt werden.

Der Druck im Röhrenbündel wird durch den Druckwächter 40 überwacht. Die Einstellung des Drucks im Röhrenbündel 39 erfolgt durch das Regelventil 41. Im nachfolgenden Entlüfter 42 werden die überschüssigen Gase ($CO_2$, $O_3$ u.a.) abgetrennt und über die Rohrleitung 43, die mit einem Regelventil 44 und einem Rückschlagventil 45 ausgerüstet ist, zur Strahlpumpe 12 geleitet.

Nach dem Entlüfter strömt das Spülwasser durch das Absperrvnetil 46 zurück in die Warmwasserzone II 6.

Der Betriebsablauf der Anlage ist wie folgt:

Das von der Waschmaschine 1 durch die Leitung 8 strömende Spülwasser wird durch die Pumpe 10 zur Venturi-Strahlpumpe 12 gefördert. In dieser Strahlpumpe wird $CO_2$ mit einem Druck von 1-10 bar, ebenso Ozon, eventuell Peroxid, Katalysator und über die Rohrleitung 43 rückgeführte Gase dem Spülwasser zugemengt, und das Gemisch strömt in das Reaktorbündel 47 ein.

Der erste Abschnitt des Reaktorbündels besteht aus der UV-Anlage 37. In dieser werden durch die Reaktion der UV-Energie mit dem Sauerstoffträger (z.B. Ozon oder Peroxyd) sowie mit Katalysator energiereiche Sauerstoffradikale gebildet, die imstande sind, die Inhaltsstoffe des Abwassers zu oxydieren und Keime abzutöten.

Den Reaktionsablauf kann man sich wie folgt vorstellen:

$$O_3 + UV \rightarrow O_2 + O°$$

$$O° + HOH \rightarrow 2\ OH°$$

$$Kat + UV \rightarrow Kat^*$$

$$Kat^* + O_3 \rightarrow O_2 + Kat + O°$$

Durch die Oxidation wird CSB abgebaut und gleichzeitig entkeimt. Ausserdem werden die Keime durch die direkte Einwirkung von UV-Energie und $O_3$ im Spülwasser abgetötet.

Die Gase wie $CO_2$, $O_3$ werden durch feinste Verteilung in der Strahlpumpe, durch Turbulenz im Reaktionsbeschleuniger 38 und durch hohe Drücke bei 10 bar sehr gut im Spülwasser aufgelöst und deshalb auch zur Reaktion gebracht. Die nicht reagierten $CO_2$ und $O_3$-Gase werden im Entlüfter 42 abgetrennt und über die Leitung 43 zur Strahlpumpe 12 zurückgeführt. Vor der Strahlpumpe 12 wird eine kleine Abwassermenge zur pH-Messung bei 16 abgezweigt. Natürlich kann die pH-Messung auch im Becken 6 erfolgen. Aufgrund des pH-Messwertes wird die Zufuhr von $CO_2$ geregelt.

Generell werden bei der Strahlpumpe 85-90 Vol.-% Gase und 15 Vol.-% Flüssigkeit zudosiert. Falls die Zugaben Gase und Flüssigkeiten in gleichem Vol.-% zudosiert werden sollen, wird unmittelbar vor der (Haupt)-Strahlpumpe ein statischer Mischer, bzw. eine zweite kleine Strahlpumpe geschaltet, welche zwei Apparate mit der erstgenannten Strahlpumpe den Bereich der Zudosierung der Zugaben bilden.

Somit verlässt das behandelte Spülwasser den Röhrenbündelreaktor 47 neutralisiert, entkeimt und CSB-reduziert und gelangt schliesslich über die Warmwasserzone II 6 und die Vorweiche 2 in den Kanal 17.

Abschliessend sollte bemerkt werden, dass das Verfahren auch zu Neutralisation und CSB-$BSB_5$-Abbau oder zu Flockung und CSB-Abbau verwendet werden kann.

Aus obiger Beschreibung geht hervor, dass mit dem Verfahren eine äusserst kompakte und vor allem eine verfahrenstechnisch vielseitige Behandlung von Abwässern und Spülwässern möglich ist. So können Neutralisation, Entsteinung, Säurereinigung von Apparaten, Flockung und Flällung, Entkeimung, CSB/$BSB_5$-Abbau, Entfärbung, Geruchsentfernung mittels Oxydation mit dem Röhrenbündelreaktor und durch eine gezielte Kombination von Verfahren erfolgen.

## Patentansprüche

1. Verfahren zur reinigenden Behandlung von industriellen Abwasser, bei welcher dem Abwasser Behandlungsstoffe zugegeben werden, dadurch gekennzeichnet, dass das Abwasser zu einem Abwasserstrahl umgebildet wird und die Behandlungsstoffe gemeinsam in einem einzigen Bereich dem Abwasserstrahl zudosiert werden, um vom Abwasserstrahl mitgerissen zu werden, dass danach das Abwasser mit den mitgerissenen Behandlungsstoffen einer UV-Behandlung ausgesetzt wird, danach ein inniges Vermischen des Abwassers mit den Behandlungsstoffen unter Turbulenz bewirkt wird, und schliesslich das Gemisch aus Abwasser und darin verteilten Behandlungsstoffen unter gleichzeitiger Aufrechterhaltung eines Druckes einer Verweilzeit ausgesetzt wird.

2. Verfahren nach Anspruch 1, dadurch gekennzeichnet, dass der Druck bis zu 10 bar beträgt.

3. Verfahren nach Anspruch 1, bei dem das Abwasser Spülwasser einer Flaschen- und Gläserreinigungsmaschine ist, welches Abwasser einem Entsteinen, Entkeimen und CSB-Abbau zu unterwerfen ist, dadurch gekennzeichnet, dass die im einzigen Bereich zudosierten Behandlungsstoffe $CO_2$, Ozon und ein Katalysator sind.

4. Verfahren nach Anspruch 3, dadurch gekennzeichnet, dass $CO_2$ mit einem Druck im Bereich von 1-10 bar zudosiert wird und der Katalysator eine Titandioxydspurensuspension ist.

5. Verfahren nach Anspruch 3, dadurch gekennzeichnet, dass $CO_2$ und Ozon nach dem Einwirken auf das Spülwasser aus demselben abgetrennt und bei dem genannten Bereich dem Spülwasser wieder zugeführt werden.

6. Anlage zur Durchführung des Verfahrens nach Anspruch 1, gekennzeichnet durch mindestens eine Strahlpumpenvorrichtung einschliesslich einer Pumpe, deren Betriebsflüssigkeit das Abwasser ist und den genannten Bereich bildet, welche Strahlpumpenvorrichtung Anschlüsse aufweist, die mit den Quellen der jeweiligen Behandlungsstoffe verbunden sind, welche Strahlpumpenvorrichtung in Strömungsrichtung des Abwassers von einer UV-Anlage, einem als statischen Mischer ausgebildeten Reaktionsbeschleuniger und einer Rohrbündeleinrichtung gefolgt ist.

7. Anlage nach Anspruch 6, dadurch gekennzeichnet, dass der Rohrbündeleinrichtung eine Gas-Abtrennungsvorrichtung nachgeschaltet ist, deren Gasaustritt als Quelle eines gasförmigen Behandlungsstoffes mit der Strahlpumpeneinrichtung verbunden ist.

8. Anlage nach Anspruch 6, welch Anschlüße aufweist für mindestens einen flüßigem Behandlungsstoff und mindestens einen ausförmigen Behandlungsstoff, wobei diese Behandlungsstoffe mit einer Dosierung mit denselben Vol.-% zuführbar sind, dadurch gekennzeichnet, dass der genannte Bereich eine Hauptstrahlpumpe umfasst, der ein statischer Mischer bzw. eine zweite kleinere Strahlpumpe vorgeschaltet ist.

## Claims

1. Process for a purifying treatment of industrial waste water, in which treatment agents are added to the waste water, characterized in that the waste water is transformed into a waste water jet and the treatment agents are dosed together into the waste water jet at one single location in order to be entrained by the waste water jet, in that thereafter the waste water with the entrained treatment agents are subjected to a UV-treatment, thereafter an intimate mixing of the waste water and the treatment agents is caused at a turbulence, and that finally the mixture of waste water and treatment agents dispersed therein is subjected to a dwelling time at a simultaneous maintaining of a pressure.

2. Process according to claim 1, characterized in that the pressure amounts up to 10 bar.

3. Process according to claim 1, in which the waste water is rinsing water of a bottle and glass cleansing machine, which waste water is to be subjected to a destoning, disinfecting and reduction of CSB, characterized in that the treatment agents dosed at one single location are $CO_2$, ozone and a catalytic agent.

4. Process according to claim 3, characterized in that $CO_2$ is dosed at a pressure in the range of 1 - 10 bar and that the catalytic agent is a suspension of titanic oxide traces.

5. Process according to claim 3, characterized in that $CO_2$ and ozone are separated from the waste water after the acting upon same and added again to the waste water at said location.

6. Plant for practising the process of claim 1, characterized by at least one jet pumping apparatus including a pump of which the operating liquid is the waste water and which forms said location, which jet pumping apparatus includes connections which are connected to the sources of the respective treatment agents, which jet pumping apparatus is followed in the direction of flow of the waste water by a UV-apparatus, a reaction accelerator designed as a static mixer and a tube bundle apparatus.

7. Plant according to claim 6, characterized in that the tube bundle apparatus is followed by a gas separating apparatus of which the outlet is connected as source of a gaseous treatment agent to the jet pump apparatus.

8. Plant according to claim 6, which includes connections for at least one liquid treatment agent and at least one gaseous treatment agent, whereby these treatment agents can be fed with a dosage of same volume percentages, characterized in that said location includes a main jet pump which is preceded by a static mixer or a second, smaller jet pump, respectively.

## Revendications

1. Procédé pour la régénération d'eaux résiduaires industrielles avec addition de produits régénérants, caractérisé en ce que l'eau résiduaire est transformée en un jet et que les produits régénérants sont injectés ensemble en une seule région du jet pour être entraînés par celui-ci, que l'eau résiduaire et les produits régénérants qu'elle entraîne sont ensuite soumis à un traitement par rayonnement UV, puis l'eau résiduaire intimement mélangée à ces produits par l'action de turbulences, et que l'on laisse ensuite le mélange d'eau résiduaire et des produits régénérants répartis dans celle-ci reposer sous une certaine pression.

2. Procédé selon la revendication 1, caractérisé en ce que la pression atteint jusqu'à 10 bar.

3. Procédé selon la revendication 1, pour l'eau résiduaire produite par une installation pour le lavage de bouteilles et de verres, l'eau étant détartrée, désinfectée et débarrassée de CSB, caractérisé en ce que les produits injectés ensemble en une seule région du jet sont du $CO_2$, de l'ozone et un catalyseur.

4. Procédé selon la revendication 3, caractérisé en ce que le $CO_2$ est additionné à une pression allant de 1 à 10 bar et que le catalyseur est une suspension de traces de dioxyde de titane.

5. Procédé selon la revendication 3, caractérisé en ce que le $CO_2$ et l'ozone sont séparés de l'eau résiduaire après avoir agi sur celle-ci et y sont introduits à nouveau en ladite région du jet d'eau résiduaire.

6. Installation pour la réalisation du procédé selon la revendication 1, caractérisée par au moins un dispositif de pompe à éjection y compris une pompe actionnée par l'eau résiduaire et formant ladite région, cette pompe comportant des prises d'alimentation connectées aux sources des produits régénérants et étant suivie en aval par un dispositif à rayonnement UV, par un accélérateur de réaction réalisé sous forme de mélangeur statique, et par un faisceau de tubes.

7. Installation selon la revendication 6, caractérisée en ce que le faisceau de tubes est suivi en aval par un séparateur de gaz dont la sortie de gaz alimente la pompe en produit gazeux régénérant.

8. Installation selon la revendication 6, possédant des prises d'alimentation pour au moins un produit régénérant liquide et au moins un produit régénérateur gazeux, ces produits pouvant être introduits à des doses ayant le même pourcentage en volume, caractérisée en ce que ladite région comprend une pompe à éjection principale, suivie en aval par un mélangeur statique respectivement par une seconde pompe à éjection plus petite.